# EUROPÄISCHE PATENTSCHRIFT

(11) **EP 2 137 432 B1**
(45) Veröffentlichungstag und Bekanntmachung des Hinweises auf die Patenterteilung: **18.08.2010**
(21) Anmeldenummer: 08734714.2
(22) Anmeldetag: 20.03.2008
(51) Int. Cl.: F16H 37/08

(54) **GETRIEBEBAUEINHEIT, INSBESONDERE MEHRBEREICHSGETRIEBE**
TRANSMISSION UNIT, PARTICULARLY RANGE-CHANGE TRANSMISSION
UNITÉ DE TRANSMISSION, EN PARTICULIER TRANSMISSION MULTIPLAGE

(30) Priorität: 12.04.2007 DE 102007017573
(43) Veröffentlichungstag der Anmeldung: 30.12.2009
(73) Patentinhaber: Glöckler, Dieter, 89081 Ulm (DE)
(72) Erfinder: Glöckler, Dieter, 89081 Ulm (DE)
(74) Vertreter: Koch-Huld, Annegret Christa
(86) Internationale Anmeldenummer: PCT/EP2008/002285
(87) Internationale Veröffentlichungsnummer: WO 2008/125181

(56) Entgegenhaltungen:
- EP-A1- 0 843 111
- WO-A-2007/014706

## Beschreibung

Die Erfindung betrifft eine Getriebebaueinheit, insbesondere ein Mehrbereichsgetriebe, im einzelnen mit den Merkmalen aus dem Oberbegriff des Anspruchs 1.

Getriebeanordnungen in Form von Leistungsverzweigungsgetrieben in Form von Überlagerungsgetrieben sind in einer Vielzahl von Ausführungen bekannt. Stellvertretend wird auf nachfolgende Druckschriften verwiesen:
1. EP 1 333 194
2. DE 197 55 612 A1
3. EP 1 061 287 A2
4. DE 43 08 761 A1
5. DE 887 457 C
6. DE 10 2004 022 204 B3
7. EP 0843111 A1
8. WO 2007/014706 A1

Die Ausführung gemäß der Druckschrift DE 197 55 612 A1 umfasst eine Getriebeeingangswelle, ein mit der Getriebeeingangswelle und mit der Getriebeausgangswelle gekoppeltes stufenloses Übersetzungsgetriebe in Form eines Zugmittelgetriebes, welches einen Eingang und einen Ausgang aufweist, wobei der Eingang mit der Getriebeeingangswelle drehfest verbunden ist, eine feste Übersetzungsstufe sowie ein Überlagerungsgetriebe mit einer ersten Eingangsstufe, welche mit dem Ausgang des stufenlosen Übersetzungsgetriebes drehfest verbunden ist. Ferner ist eine zweite Eingangsstufe vorgesehen, welche wahlweise mittels einer ersten Kupplung über die feste Übersetzungsstufe mit der Getriebeeingangswelle verbindbar ist und eine Ausgangsstufe, welche drehfest mit der Getriebeausgangswelle gekoppelt ist. Hierbei ist die feste Übersetzungsstufe antriebsseitig drehfest mit der Getriebeeingangswelle gekoppelt und bezüglich der festen Übersetzungsstufe abtriebsseitig die erste Kupplung derart angeordnet, dass diese wahlweise die zweite Eingangsstufe des Überlagerungsgetriebes abtriebsseitig mit dem festen Übersetzungsgetriebe verbindet. Mit dieser Lösung ist es möglich, auf einfache Art und Weise ein betriebssicheres Mehrbereichsgetriebe zur Verfügung zu stellen. Diese Lösung bietet den Vorteil, dass bei einem durch Kombination eines stufenlosen Übersetzungsgetriebes mit einem Überlagerungsgetriebe geschaffenen Mehrbereichsgetriebe mit einem sogenannten Geared-Neutral Bereich hohe Eingriffsgeschwindigkeiten im Bereich der ersten Kupplung vermieden werden, da diese an einer Stelle nach einer entsprechenden Übersetzung der hohen Drehzahl der Antriebswelle auf die niedrige Drehzahl durch die feste Übersetzungsstufe angeordnet ist. Dies reduziert den Verschleiß und erhöht die Lebensdauer der ersten Kupplung. Ein wesentlicher Nachteil besteht jedoch in der direkten Kopplung zwischen stufenlosem Getriebe, auch CVT genannt, und dem Getriebeeingang und damit der Antriebswelle. Das stufenlose Getriebe ist somit immer an die Drehzahl der Antriebsmaschine gekoppelt. Eine Entlastung des Überlagerungsgetriebes in einem Bereich höherer Drehzahlen der Abtriebswelle beziehungsweise niedrigerer Übersetzungsverhältnisse des stufenlosen Übersetzungsgetriebes wird dadurch erzielt, dass eine zweite Kupplung vorgesehen wird, welche wahlweise die erste Eingangsstufe mit der Ausgangsstufe des Überlagerungsgetriebes verbindet. Dadurch wird eine starre Verbindung zwischen Ausgangswelle des stufenlosen Übersetzungsgetriebes und der Abtriebswelle geschaffen, wodurch das Überlagerungsgetriebe im Drehmomentenfluss überbrückt ist. Ein weiteres wesentliches Problem der Leistungsübertragung über das stufenlose Übersetzungsgetriebe besteht darin, dass dieses aufgrund entsprechender Dimensionierung nur ein maximal zulässiges Moment übertragen kann, ansonsten sind bei sehr hohen Belastungen unzulässige Schlupfzustände zu beobachten, die zu einem erhöhten Verschleiß am Zugmittel führen. Aufgrund der direkten Kopplung des stufenlosen Getriebes an den Getriebeeingang ist dieser jedoch immer den an diesen vorgesehenen Verhältnissen ausgesetzt. Das heißt, der Eingang des CVT wird mit der Drehzahl am Getriebeeingang und damit der Antriebsmaschine beaufschlagt.

Aus der Druckschrift EP 1 333 194 ist eine Getriebebaueinheit vorbekannt, welche hinsichtlich ihres Aufbaus derart modifiziert wurde, dass die Belastung des Zugmittelgetriebes erheblich reduziert und damit die Übertragbarkeit hoher Leistungen, insbesondere höherer Leistungen als bei einer Ausführung gemäß DE 197 55 612 A1 über dieses gesichert werden konnte. Bei dieser Ausführung ist die Getriebebaueinheit ebenfalls als Überlagerungsgetriebeeinheit ausgeführt. Diese umfasst einen Getriebeeingang und einen Getriebeausgang, ferner zwei zwischen Getriebeeingang und Getriebeausgang angeordnete und miteinander gekoppelte Überlagerungsgetriebe. Jedes der beiden Überlagerungsgetriebe ist dabei als dreiwelliges Planetengetriebe ausgeführt. Beide sind miteinander zu einem vierwelligen Planetengetriebe gekoppelt. Zwischen dem ersten Überlagerungsgetriebe und dem zweiten Überlagerungsgetriebe ist ferner ein stufenloses Getriebe in Form eines Zugmittelgetriebes zwischengeschaltet. Jedes Planetengetriebe umfasst ein Sonnenrad, ein Hohlrad, Planetenräder und einen Steg. Die einzelnen Wellen werden dabei vom Sonnenrad, Hohlrad oder Steg des jeweiligen Überlagerungsgetriebes gebildet. Der Getriebeeingang ist dabei mit einer ersten Welle des ersten Überlagerungsgetriebes und einer ersten Welle des zweiten Überlagerungsgetriebes drehfest verbunden. Der Getriebeausgang ist mit einer zweiten Welle des ersten Überlagerungsgetriebes und einer zweiten Welle des zweiten Überlagerungsgetriebes drehfest verbunden. Die Kopplung der beiden dreiwelligen Planetengetriebe zu einem vierwelligen Planetengetriebe erfolgt dabei durch Kopplung der ersten und zweiten Wellen vom ersten und zweiten Überlagerungsgetriebe. Der Begriff Welle ist dabei funktional zu verstehen, wobei unter diesem entweder die einzelnen Elemente der Planetengetriebe - Sonnenrad, Hohlrad oder Steg oder die mit diesen drehfest gekoppelten Elemente, beispielsweise in Form von Wellen oder Hohlwellen, zu verstehen sind. Die einzelnen Wellen übernehmen dabei je nach Betriebszustand die Funktion von Eingängen und Ausgängen. So umfasst das erste Überlagerungsgetriebe bei Leistungsübertragung von der Getriebeeingangswelle zur Getriebeausgangswelle über das stufenlose Getriebe einen Eingang und zwei Ausgänge. Der Eingang wird dabei von der ersten Welle gebildet, während der Ausgang der mit dem stufenlosen Getriebe wenigstens mittelbar verbunden ist, von der dritten Welle gebildet wird und der zweite, mit der Getriebeausgangswelle drehfest gekoppelte Ausgang von der zweiten Welle. Das zweite Überlagerungsgetriebe umfasst in diesem Betriebszustand einen Eingang und einen Ausgang, wobei der Eingang ebenfalls mit der Getriebeeingangswelle gekoppelt ist und von der ersten Welle des zweiten Überlagerungsgetriebes gebildet wird und der Ausgang von der zweiten Welle. Die dritte Welle ist mit dem stufenlosen Getriebe verbunden. Ferner sind Mittel zur Änderung des Übersetzungsverhältnisses am Getriebe vorgesehen. Dabei weist eines der beiden Überlagerungsgetriebe - erstes oder zweites Überlagerungsgetriebe - paarweise miteinander kämmende Planetenräder zwischen Sonnenrad und Hohlrad auf. Diese sind am Steg drehbar gelagert. Die paarweise miteinander kämmenden Planetenräder werden auch alsdoppelläufige Planetenräder bezeichnet. Aufgrund der Ausführung eines der als Planetengetriebe ausgebildeten zweiten Überlagerungsgetriebes mit paarweise miteinander kämmenden Planetenrädern, welche auch als doppelläufige Planetengetriebe bezeichnet werden, wird für den Teilbereich des Gesamtbetriebsbereiches garantiert, dass das CVT mit maximaler Umlaufgeschwindigkeit arbeitet, wobei auch ein Wechsel bezüglich des Übersetzungsverhältnisses an den einzelnen Scheiben bei maximaler Motordrehzahl stattfinden kann, das heißt ein über Null drehen möglich ist und somit mit dem erfindungsgemäßen Getriebe neben einem Geared-Neutral auch eine Drehrichtungsänderung zu realisieren ist. Die doppelläufige Ausführung bietet den Vorteil, dass bei einer durch diese bedingte Vergrößerung der Drehzahl am mit dem stufenlosen Getriebe gekoppelten Ausgang, insbesondere Hohlrad, dieses Planetengetriebes eine entsprechend der Auslegung des anderen Planetengetriebes bedingte Verringerung am mit dem stufenlosen Getriebe gekoppelten Ausgang des jeweils anderen Planetengetriebes, insbesondere Hohlrad bewirkt. Nach dieser Ausführung ist es jedoch nicht möglich, das stufenlose Getriebe über den gesamten Betriebsbereich mehrere Male mit maximaler Umlaufgeschwindigkeit arbeiten zu lassen. Eine weitere Ausführung eines Mehrbereichsgetriebes ist aus der Druckschrift DE 10 2004 022 204 B3 vorbekannt. Diese umfasst eine einfache Planetenradstufe, drei Stimradstufen, zwei Kupplungseinrichtungen und ein Umschlingungsgetriebe. Die Abtriebswelle ist mittels der beiden Kupplungseinrichtungen optional mit der Sonnen- oder Hohlradwelle verbunden.

Aus der EP 0843111 A1 sind Getriebekonfigurationen aus einem hydrodynamischen Drehzahl-/Drehmomentwandler und einem, zumindest zwei dreiwellige Planetenradgetriebe umfassenden mechanischen Getriebeteil vorbekannt. Die Überbrückung des hydrodynamischen Drehzahl/Drehmomentwandlers erfolgt durch Abbremsung/Feststellung des Pumpenrades-Für die einzelnen Betriebsmodi sind zwei Kupplungen und zwei Bremseinrichtungen vorgesehen, die unterschiedlichen Komponenten zugeordnet sind. Die gesamte Konfiguration ist dadurch sehr aufwändig.

Eine Getriebebaueinheit gemäß dem Oberbegriff des Anspruches 1 ist aus WO2007/014706 A1 vorbekannt.

Der Erfindung liegt die Aufgabe zugrunde, ein Mehrbereichsgetriebe aus einem stufenlosen Getriebe, insbesondere in Form eines Zugmittelgetriebes und Planetenradsätzen zu schaffen, welches zum einen durch eine hohe Gesamtspreizung charakterisiert ist und ferner durch einen relativ einfachen und in axialer Richtung platzsparenden Aufbau. Ferner ist auf eine sehr hohe Entlastung im zweiten Betriebsbereich mit großem Zeitanteil abzustellen, der dem Betriebsbereich entspricht, der außerhalb des Anfahrbereiches liegt, und des weiteren ein Betrieb über Null zu realisieren, so dass auf zusätzliche Mittel zur Realisierung der Rückwärtsfahrt verzichtet werden kann.

Die erfindungsgemäße Lösung ist durch die Merkmale des Anspruchs 1 charakterisiert. Vorteilhafte Ausgestaltungen sind in den Unteransprüchen beschrieben.

Die Getriebebaueinheit, insbesondere das Mehrbereichsgetriebe, umfasst zumindest einen Eingang und wenigstens einen Ausgang, ferner einen zwischen dem Eingang und dem Ausgang angeordneten stufenlosen Getriebeteil und einen mechanischen Getriebeteil, wobei der mechanische Getriebeteil ein vierwelliges Planetenradgetriebe umfasst, das aus einem ersten Planetenradsatz und einem zweiten Planetenradsatz besteht und das wahlweise über eine erste Kupplungseinrichtung oder eine zweite schaltbare Kupplungseinrichtung mit dem Ausgang verbunden ist. Die erfindungsgemäße Lösung ist ferner dadurch charakterisiert, dass in allen Betriebsbereichen keine direkte Kopplung zwischen der Getriebeeingangswelle und dem stufenlosen Getriebe, insbesondere der jeweils als Eingang des stufenlosen Getriebes bei Ausführung als Umschlingungsgetriebe fungierenden Scheibenanordnung existiert, sondern diese über das Überlagerungsgetriebe realisiert wird. Das stufenlose Getriebe ist somit bezogen auf den Leistungsfluss zwischen dem Überlagerungsgetriebe und dem Ausgang angeordnet.

Erfindungsgemäß umfassen der erste Planetenradsatz und der zweite Planetenradsatz des Planetengetriebes jeweils eine erste Welle und eine zweite Welle, wobei die ersten Wellen drehfest miteinander und mit dem Getriebeeingang wenigstens mittelbar verbunden sind, d.h. direkt oder über weitere Übertragungselemente und die zweite Welle des ersten Planetenradsatzes mit dem stufenlosen Getriebeteil und die zweite Welle des zweiten Planetenradsatzes mit einem Eingangsteil der ersten Kupplungseinrichtung verbunden ist. Der erste Planetenradsatz umfasst eine dritte Welle, die mit dem stufenlosen Getriebe verbunden ist, wobei die dritte Welle ferner über die zweite Kupplungseinrichtung mit dem Ausgang verbindbar ist. Das Planetenradgetriebe besteht somit aus zwei Planetenradsätzen, wobei der eine von beiden frei von einem Sonnenrad ist. Damit bildet das Planetenradgetriebe quasi einen modifizierten Ravigneauxsatz, jedoch frei von einem zweiten Sonnenrad.

Der erste Planetenradsatz ist durch drei Wellen, der zweite Planetenradsatz durch zwei Wellen charakterisiert, wobei die Kopplung zwischen dem ersten und dem zweiten Planetenradsatz über einen gemeinsamen Steg erfolgt. Dies bedingt, dass die beiden Planetenradsätze in axialer Richtung räumlich nah beieinander angeordnet sind. Die ersten Wellen des ersten und des zweiten Planetenradsatzes sind dabei drehfest miteinander gekoppelt und sind ferner mit dem Eingang der Getriebebaueinheit verbunden. Die ersten Wellen werden dabei jeweils vom Steg gebildet, so dass die Planetenräder der einzelnen Planetenradsätze auf einem gemeinsamen Steg angeordnet sind und somit ebenfalls miteinander drehfest verbunden sind. Die zweite Welle des ersten Planetenradsatzes und die dritte Welle des ersten Planetenradsatzes sind mit dem stufenlosen Getriebeteil verbunden, wobei die dritte Welle zusätzlich mit dem Getriebeausgang A über die zweite Kupplungseinrichtung wahlweise verbindbar ist. Die Kopplung zwischen dem Planetenradgetriebe und dem stufenlosen Getriebe erfolgt dabei nicht direkt, sondern vorzugsweise über eine Übersetzungsstufe, wobei die Übersetzung auch 1:1 betragen kann. Der zweite Planetenradsatz des Planetengetriebes, insbesondere die zweite Welle ist über die erste Kupplungseinrichtung mit dem Ausgang wahlweise verbindbar. Jede der Kupplungseinrichtungen umfasst einen ersten Kupplungsteil, der mit den entsprechenden Wellen des Planetengetriebes verbunden ist und einen Ausgangsteil, der drehfest mit dem Ausgang verbunden ist. Beide Kupplungseinrichtungen können auch in einer Doppelkupplungseinheit zusammengefasst werden.

Die erfindungsgemäße Lösung ermöglicht einen Getriebeaufbau, der durch eine kompakte axiale Länge charakterisiert ist, welche insbesondere aufgrund der Modifikation des Ravigneauxsatzes erzielt wird. Ferner kann mit der beschriebenen Getriebekonfiguration auch ein Geared -Neutral realisiert werden, wodurch in besonders vorteilhafter Weise auf eine separate Anordnung zur Realisierung eines Rückwärtsganges verzichtet werden kann.

Bei dem stufenlosen Getriebe handelt es sich vorzugsweise um ein Zugmittelgetriebe. Dabei kann es sich um ein kraft- oder formschlüssiges Zugmittelgetriebe handeln. Im einfachsten Fall wird dieses zwei Scheibenanordnungen umfassen, über die ein Zugmittel läuft, welches mit Kraftschluss arbeitet. Andere Ausführungen sind denkbar. Ferner ist es denkbar, anstatt des Zugmittelgetriebes ein mechanisches stufenloses Getriebe in Form eines Toroidgetriebes einzusetzen oder aber auch ein elektrisches Getriebe, welches beispielsweise aus zwei als Generator und/oder Motor betreibbaren elektrischen Maschinen besteht, die über einen Spannungszwischenkreis miteinander gekoppelt sind.

Zur Verstellung des übertragbaren Leistungsanteils über das stufenlose Getriebe beziehungsweise zur Drehzahl-/Drehmomentwandlung sind dem stufenlosen Getriebe entsprechende Mittel zugeordnet. Diese können je nach Ausführung des stufenlosen Getriebes mechanisch, hydraulisch, elektro-pneumatisch ausgeführt sein. Andere Möglichkeiten sind ebenfalls denkbar. Bei Ausführung als Zugmittelgetriebe sind Mittel zur Verstellung des Scheibenabstandes beziehungsweise des Laufradius für das Zugmittel an den einzelnen Scheibenanordnungen vorgesehen.

Der Getriebeeingang kann koaxial oder aber auch konzentrisch zu den einzelnen Elementen, stufenloses Getriebe, mechanischer Getriebeteil sein. Ferner kann zwischen dem Eingang und dem Ausgang Koaxialität oder Exzentrizität bestehen. Dies hängt im einzelnen vom konkreten Aufbau und der Konfiguration des Getriebes ab.

Das erfindungsgemäße Getriebe ist durch die zwei Kupplungseinrichtungen, welche wahlweise schaltbar sind, wobei die Betätigung in der Regel wechselweise erfolgen wird, jedoch zur Vermeidung von Zugkfaftunterbrechung einander bei Synchronität überlagernd erfolgen wird, durch zwei Betriebsbereiche charakterisiert, einen ersten Betriebsbereich, welcher der ersten Kupplungseinrichtung zugeordnet ist und den Anfahrbereich markiert und einen zweiten Betriebsbereich, der dem Betriebsbereich entspricht, der außerhalb des Anfahrbereiches genutzt wird. Durch die erfindungsgemäße Ausführung ist es dabei möglich, dass zum einen eine sehr hohe Gesamtspreizung erzielt wird und ferner in beiden Fahrbereichen beziehungsweise Betriebsbereichen eine Entlastung des stufenlosen Getriebeteils erreicht wird. In jedem der einzelnen Betriebsbereiche sind die Drehzahl und das Drehmoment stufenlos wandelbar.

Die erfindungsgemäße Lösung ist sowohl für Fahrzeuge einsetzbar als auch für stationäre Anwendungen, beispielsweise in Windkraftanlagen etc.

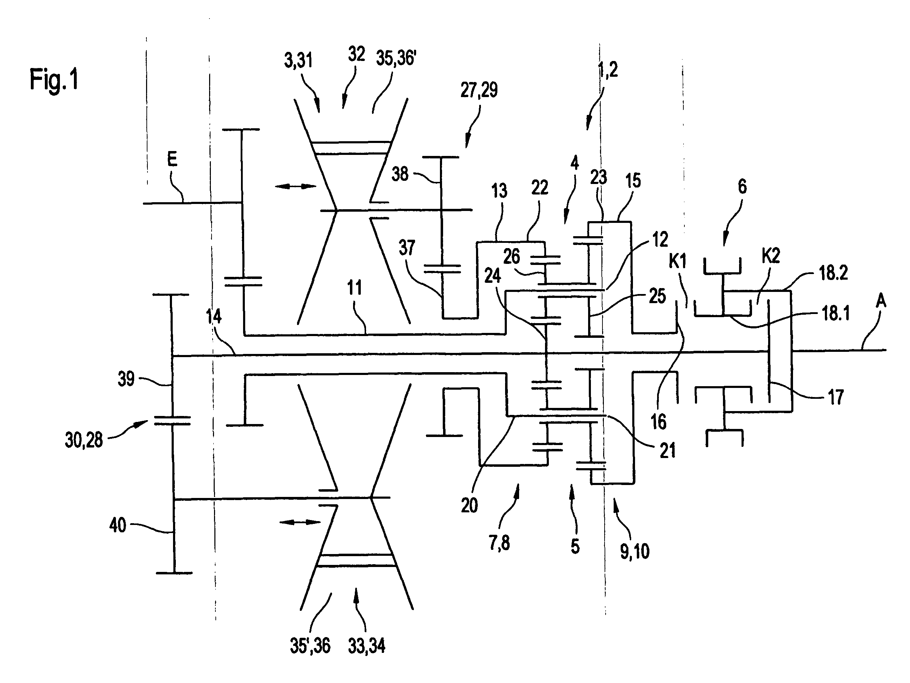

Die erfindungsgemäße Lösung wird nachfolgend anhand einer Figur erläutert. Darin ist eine besonders vorteilhafte Ausführung der erfindungsgemäßen Lösung dargestellt. Die erfindungsgemäße Lösung ist jedoch nicht auf die Ausführung in Figur 1 beschränkt. Andere Modifikationen der Getriebekonfiguration sind möglich.

Die Figur 1 verdeutlicht in schematisiert vereinfachter Darstellung den Grundaufbau einer erfindungsgemäß ausgeführten Getriebebaueinheit 1, insbesondere in Form eines Mehrbereichsgetriebes 2. Diese umfasst mindestens einen Eingang E und einen Ausgang A, einen stufenlosen Getriebeteil 3 und einen mechanischen Getriebeteil 4. Der mechanische Getriebeteil 4 umfasst ein Planetengetriebe 5. Das Planetengetriebe 5 ist als vierwelliger Planetenradsatz aufgebaut, wobei der Grundaufbau einem modifiziertem Ravigneauxsatz entspricht, allerdings frei von einem zweiten Sonnenrad, und wobei eine der Wellen mit dem stufenlosen Getriebeteil 3 verbunden ist und gleichzeitig mit dem Ausgang A verbindbar ist. Das vierwellige Planetengetriebe 5 ist über zwei Kupplungseinrichtungen in Form von schaltbaren Kupplungen K1 und K2 mit dem Ausgang A wahlweise verbindbar. Die Kopplung mit dem Ausgang A erfolgt über die Kopplung der unterschiedlichen Wellen des Planetengetriebes 5 über die Kupplungseinrichtungen K1 und/oder K2. Die einzelnen Kupplungseinrichtungen K1 und K2 weisen einen Eingangsteil 16 beziehungsweise 17 auf, der bei Betätigung der Kupplungseinrichtungen K1 und K2 mit einem, jeweils drehfest mit dem Ausgang A verbundenen zweiten Kupplungsteil 18.1, 18.2 in Wirkverbindung bringbar ist. Das Planetengetriebe 5 ist ferner mit dem Eingang E verbunden oder aber je nach Ausführung in entsprechenden Anwendungen verbindbar. Der stufenlose Getriebeteil 3 ist über das Planetengetriebe 5 mit einem Kupplungsteil der zweiten Kupplungseinrichtung K2 verbunden. Der stufenlose Getriebeteil 3 ist somit zwischen dem Planetengetriebe 5 und dem Ausgang A angeordnet. Wie bereits ausgeführt, handelt es sich beim Planetengetriebe 5 um eine Ausführung eines vierwelligen Planetengetriebes in Form eines modifizierten Ravigneauxsatzes, jedoch frei von einem zweiten Sonnenrad. Das Planetengetriebe 5 besteht dazu aus einem dreiwelligen Planetengetriebe 7 in Form eines ersten Planetenradsatzes 8 und einem zweiwelligen Planetengetriebe 9 in Form eines zweiten Planetenradsatzes 10. Dabei sind eine erste Welle 11 des ersten Planetenradsatzes 8 und eine erste Welle 12 des zweiten Planetenradsatzes 10 drehfest miteinander und mit dem Eingang E verbunden. Die erste Welle 11 des ersten Planetenradsatzes 8 und die erste Welle 12 des zweiten Planetenradsatzes 10 des mechanischen Getriebeteils 4, insbesondere des Planetengetriebes 5, sind drehfest miteinander gekoppelt. Eine zweite Welle 13 ist mit dem stufenlosen Getriebeteil 3, insbesondere über ein Verbindungsgetriebe 27 verbunden, während eine dritte Welle 14 des ersten Planetenradsatzes 8 mit dem stufenlosen Getriebeteil 3 verbunden ist, insbesondere über ein Verbindungsgetriebe 28 und ferner drehfest mit einem Eingangsteil 17 der zweiten Kupplungseinrichtung K2. Eine zweite Welle 15 des zweiten Planetenradsatzes 10 ist mit dem Ausgang A wenigstens mittelbar, insbesondere über Kupplungseinrichtung K1 verbindbar. Dazu ist die zweite Welle 15 drehfest mit einem Eingangsteil 16 der ersten Kupplungseinrichtung K1 verbunden.

Die erste Welle 11 des ersten Planetenradsatzes 8 des vierwelligen Planetengetriebes 5 im mechanischen Getriebeteil 4 wird dabei vom Steg 20 gebildet. Ferner wird auch die erste Welle 12 des zweiten Planetenradsatzes 10 des vierwelligen Planetengetriebes 5 von einem Steg 21 gebildet. Der Steg 20 und der Steg 21 sind drehfest miteinander gekoppelt beziehungsweise bilden eine integrale Baueinheit. Über die Stege 20, 21 erfolgt die Kopplung zwischen den beiden Planetenradsätzen 8 und 10. Die Planetenräder 25 und 26 der einzelnen Planetenradsätze 8, 10 sind miteinander drehfest verbunden. Die zweite Welle 13 des ersten Planetenradsatzes wird von einem Hohlrad 22 gebildet, während die zweite Welle 15 des zweiten Planetenradsatzes von einem Hohlrad 23 gebildet wird. Die dritte Welle 14 des ersten Planetenradsatzes 8 wird von einem Sonnenrad 24 gebildet. Der zweite Planetenradsatz 10 ist frei von einer derartigen dritten Welle. Dies bedeutet, dass die Planetenräder 25 des zweiten Planetenradsatzes 10 lediglich mit dem Hohlrad 23 kämmen, während die Planetenräder 26 des ersten Planetenradsatzes 8 zwischen Sonnenrad 24 und Hohlrad 22 laufen. Die Kopplung mit dem stufenlosen Getriebeteil 3 erfolgt hier nicht direkt über direkte Kopplung der Wellen, insbesondere der zweiten Welle 13 und der dritten Welle 14 mit dem stufenlosen Getriebeteil 3, sondern über Verbindungsgetriebe 27 und 28, welche im einfachsten Fall lediglich eine Übersetzungsstufe 29 beziehungsweise 30 zwischen den jeweiligen Wellen 13 und 14 und dem stufenlosen Getriebeteil 3 beinhalten. Das stufenlose Getriebe 3 ist im dargestellten Fall als Umschlingungsgetriebe 31 ausgebildet und umfasst eine erste Scheibenanordnung 32 und eine zweite Scheibenanordnung 33, die über ein Zugmittel 34 miteinander gekoppelt sind, wobei je nach Scheibenstellung über das Zugmittel die Drehzahl und das Drehmoment gewandelt werden kann. Die einzelnen Scheibenanordnungen 32 und 33 fungieren dabei je nach Anordnung und Betätigung, da diese hinsichtlich ihres Abstandes voneinander verstellbar sind, als Eingang 35 und als Ausgang 36 des stufenlosen Getriebeteils 3. Je nach Leistungsübertragungsrichtung in der Getriebebaueinheit 1 und damit Übertragung über den stufenlosen Getriebeteil 3 wird die Übertragungsrichtung gewechselt beziehungsweise die Drehrichtung am Ausgang A der Getriebebaueinheit.

Die Übersetzungsstufe 29 umfasst im einfachsten Fall zwei miteinander kämmende Stirnräder 37 und 38, wobei das Stirnrad 37 vom Hohlrad 22 des ersten Planetenradsatzes 8 mit gebildet wird beziehungsweise mit diesem eine bauliche Einheit bildet. Die Übersetzungsstufe 30 umfasst ebenfalls vorzugsweise jeweils zwei Stirnräder 39 und 40, wobei das Stirnrad 39 drehfest mit der dritten Welle 14 in Form des Sonnenrades 24 des ersten Planetenradsatzes 8 verbunden ist. Das Stirnrad 40 ist drehfest mit der zweiten Scheibenanordnung 33 verbunden. Für die Übersetzungsstufe 29 gilt, dass das Stirnrad 38 drehfest mit der ersten Scheibenanordnung 32 verbunden ist. Die Übersetzungsstufen 29 und 30 können auch anders ausgeführt sein. Im einfachsten Fall umfassen diese zumindest zwei miteinander kämmende Stirnräder, eine andere Anzahl ist jedoch ebenfalls denkbar, wobei beide Übersetzungsstufen durch eine gleiche Übersetzungsrichtung charakterisiert sein sollten.

Der Eingang E der Getriebebaueinheit 1 ist hier exzentrisch zur Rotationsachse des mechanischen Getriebeteils 4 und des stufenlosen Getriebes 3 angeordnet und damit auch exzentrisch zum Ausgang A.

Die Getriebebaueinheit 1 kann in zwei Betriebsbereichen betrieben werden, wobei ein erster durch die Betätigung der Kupplungseinrichtung K1 charakterisiert ist. In diesem Fall wird für den gesamten Bereich der Übersetzungsbereich des CVT's voll ausgenutzt. Im zweiten Betriebsbereich ist die zweite Kupplungseinrichtung K2 geschaltet und die erste Kupplungseinrichtung K1 gelöst. In diesem Fall erfolgt die Durchkopplung vom ersten Planetenradsatz 8 zum Ausgang A über die Kupplungseinrichtung K2. Innerhalb der Betriebsbereiche kann eine Verstellung im stufenlosen Getriebeteil 3 jeweils über den gesamten Verstellbereich in beiden Richtungen erfolgen. Für das Umschlingungsgetriebe 31 bedeutet dies, dass sowohl die erste Scheibenanordnung 32 und die zweite Scheibenanordnung 33 jeweils in beide Richtungen in ihre Maximalstellungen verfahrbar sind. Dabei ist mit der erfindungsgemäßen Lösung ein Geared-Neutral-Betrieb möglich. Dies bedeutet, dass auf einen separaten Rückwärtsgang verzichtet werden kann, indem hier im Rahmen des Verstellbereiches des stufenlosen Getriebes im Zusammenwirken mit dem Planetengetriebe 5 eine Drehrichtungsumkehr möglich ist.

Im ersten Betriebsbereich wird dabei die erste Scheibenanordnung 32 von langsam, das heißt großer Umschlingungswinkel, in Richtung "schnell", das heißt kleiner Umschlingungswinkel, verstellt. Die Auslegung des Gesamtgetriebes erfolgt dabei derart, dass einem Teil des Verstellbereiches, das heißt nach etwa ca. 75 Prozent, von "schnell" nach "langsam" der ersten Scheibenanordnung 32 der Geared-Neutralbereich erzielt wird, das heißt, das Getriebe am Ausgang A quasi steht und bei Weiterverstellung in Richtung eines noch größeren Umschlingungsbereichs eine Drehrichtungsumkehr am Ausgang A der Getriebebaueinheit bewirkt. Das bedeutet, es gibt einen Punkt im Verstellbereich, an welchem ein über Null drehen erzielt wird. Im ersten Betriebsbereich ist dabei die erste Kupplungseinrichtung K1 geschaltet, die zweite Kupplungseinrichtung K2 geöffnet. Die Leistungsübertragung erfolgt vom Eingang E zum Ausgang A über den ersten Planetenradsatz 8 auf den stufenlosen Getriebeteil 3 und durch Rückkopplung wiederum zum zweiten Planetenradsatz 10 auf den Ausgang A. Dies bedeutet, dass der Antrieb primär über den Eingang E zur ersten Welle 11, das Sonnenrad 24 auf die zweite Scheibenanordnung 33 erfolgt, die wiederum über das Zugmittel 34 auf die Scheibenanordnung 32 überträgt, die in diesem Fall als Ausgang der stufenlosen Getriebeeinheit wirkt und die Rückkopplung über die Planetenräder der zweite Planetenradsatz 10 angetrieben wird und damit auch der Ausgang A über die Kupplungseinrichtung K1. Je nach Verstellung im stufenlosen Getriebe wird die Drehzahl am Ausgang A variiert. Ist der Verstellbereich der ersten Scheibenanordnung 32 dahingehend ausgeschöpft, dass dieser in einer Stellung steht, bei welcher der Laufradius für das Zugmittel 34 auf dem kleinsten möglichen Laufradius liegt, das heißt zwischen der Scheibenanordnung 33 zur Scheibenanordnung 32 eine Übersetzung ins Langsame erfolgt beziehungsweise anders herum von 32 nach 33 eine Übersetzung ins Schnelle, laufen alle Wellen am vierwelligen Planetengetriebe 5 synchron. In diesem Fall kann die Kupplung K2 betätigt werden und die Kupplung K1 geöffnet. Dabei ist ein teilweises Überschneiden der Betätigung der Kupplungseinrichtungen K1 und K2 möglich und auch von Vorteil, da dann keine Zugkraftunterbrechung erfolgt. Denkbar wäre jedoch auch bei vollständiger Synchronität der Einsatz synchron schaltbarer Kupplungen.

Ist die Kupplungseinrichtung K2 geschlossen, ist der Verstellbereich der zweiten Scheibenanordnung 33 derart gewählt, dass dieser auf einem größeren Laufradius als der der ersten Scheibenanordnung 32 liegt, erfolgt eine Verstellung an der zweiten Scheibenanordnung 33 wieder in Richtung eines kleineren Laufradius, das heißt, diese wird schneller, während die Verstellung an der ersten Scheibenanordnung 32 in Richtung eines größeren Laufradius erfolgt, das heißt, diese dreht langsamer.

Vorzugsweise werden folgende Übersetzungen für die Auslegung der Planetenradsätze gewählt. Der erste Planetenradsatz 8 ist dabei durch eine Standübersetzung zu 1 : 2 charakterisiert, das heißt, das Sonnenrad 24 ist zweimal kleiner als das Hohlrad 22. Des weiteren sind folgende Übersetzungsbereiche denkbar, wobei die Aufzählung jedoch nicht abschließend ist: 1:1,62 bis 1:2,5

Die in der Figur 1 dargestellte Getriebebaueinheit stellt eine besonders vorteilhafte Ausführung mit einer geringen Anzahl an Schaltelementen, hier nur der Schaltelemente K1 und K2, dar, ferner ist der Anteil der Bauelemente ebenfalls auf ein Minimum begrenzt. Mit dieser Ausführung ist es möglich, eine besonders hohe Spreizung im ersten Betriebsbereich zu erzielen. Die Kupplungseinrichtungen K1 und K2 können auch in einer Doppelkupplungsanordnung 6 zusammengefasst werden.

### Bezugszeichenliste

- 1: Getriebebaueinheit
- 2: Mehrbereichsgetriebe
- 3: stufenloser Getriebeteil
- 4: mechanischer Getriebeteil
- 5: vierwelliges Planetengetriebe
- 6: Doppelkupplung
- 7: dreiwelliges Planetengetriebe
- 8: erster Planetenradsatz
- 9: zweiwelliges Planetengetriebe 10 zweiter Planetenradsatz
- 11: erste Welle
- 12: erste Welle
- 13: zweite Welle
- 14: dritte Welle
- 15: zweite Welle des Planetenradsatzes 10
- 16: Eingangsteil
- 17: Eingangsteil
- 18.1, 18.2: Ausgangsteil
- 20: Steg
- 21: Steg
- 22: Hohlrad
- 23: Hohlrad
- 24: Sonnenrad
- 25: Planetenrad
- 26: Planetenrad
- 27: Verbindungsgetriebe
- 28: Verbindungsgetriebe
- 29: Übersetzungsstufe
- 30: Übersetzungsstufe
- 31: Umschlingungsgetriebe
- 32: erste Scheibenanordnung
- 33: zweite Scheibenanordnung
- 34: Zugmittel
- 35: Eingang
- 36: Ausgang
- 37: Stirnrad
- 38: Stirnrad
- 39: Stirnrad
- 40: Stirnrad
- E: Eingang
- A: Ausgang
- K1: erste Kupplungseinrichtung
- K2: zweite Kupplungseinrichtung

## Patentansprüche

1. Getriebebaueinheit (1), insbesondere Mehrbereichsgetriebe, umfassend einen Eingang (E) und einen Ausgang (A), mit einem stufenlosen Getriebeteil (3) und einem mechanischen Getriebeteil (4), wobei der mechanische Getriebeteil (4) ein vierwelliges Planetengetriebe (5) umfasst, das aus einem ersten Planetenradsatz (8) und einem zweiten Planetenradsatz (10) besteht, wobei in allen Betriebsbereichen keine direkte Kopplung zwischen der Getriebeeingangswelle (E) und dem stufenlosen Getriebeteil (3) existiert, **dadurch gekennzeichnet, dass** das vierwellige Planetengetriebe (5), wahlweise über eine erste schaltbare Kupplungseinrichtung (K1) oder eine zweite schaltbare Kupplungseinrichtung (K2) mit dem Ausgang (A) verbunden ist, der erste Planetenradsatz (8) durch drei Wellen (11,13,14), der zweite Planetenradsatz (10) durch zwei Wellen (12,15) charakterisiert ist, wobei die Kopplung zwischen dem ersten (8) und dem zweiten (10) Planetenradsatz über einen gemeinsamen Steg (20,21) erfolgt,und dass der erste Planetenradsatz (8) und der zweite Planetenradsatz (10) des Planetengetriebes (5) jeweils eine erste (11, 12) Welle und eine zweite Welle (13, 15) umfassen wobei die ersten Wellen (11, 12) drehfest miteinander und wenigstens mittelbar mit dem Getriebeeingang (E) verbunden sind und die zweite Welle (13) des ersten Planetenradsatzes (8) mit dem stufenlosen Getriebeteil (3) und die zweite Welle (15) des zweiten Planetenradsatzes (10) mit einem Eingangsteil (18) der ersten Kupplungseinrichtung (K1) verbunden ist und der erste Planetenradsatz (8) eine dritte Welle (14) umfasst, die mit dem stufenlosen Getriebe (3) verbunden ist, wobei die dritte Welle (14) ferner über die zweite Kupplungseinrichtung (K2) mit dem Ausgang (A) verbindbar ist.

2. Getriebebaueinheit (1) nach Anspruch 1, **dadurch gekennzeichnet, dass** der zweite Planetenradsatz (10) des Planetengetriebes (5) über die erste Kupplungseinrichtung (K1) mit dem Ausgang (A) verbindbar ist.

3. Getriebebaueinheit (1) nach einem der Ansprüche 1 oder 2, **dadurch gekennzeichnet, dass** die zweite (13) und dritte Welle (14) des ersten Planetenradsatzes (8) jeweils über eine Übersetzungsstufe (29, 30) mit dem stufenlosen Getriebe (3) verbunden sind.

4. Getriebebaueinheit (1) nach einem der Ansprüche 1 bis 3, **dadurch gekennzeichnet, dass** die erste Welle (11, 12) des ersten Planetenradsatzes (8) und des zweiten Planetenradsatzes (10) jeweils vom Steg (20, 21) der Planetenradsätze (8, 10) gebildet werden und die Planetenräder (25, 26) der einzelnen Planetenradsätze (8, 10) drehfest miteinander gekoppelt sind.

5. Getriebebaueinheit (1) nach einem der Ansprüche 1 bis 4, **dadurch gekennzeichnet, dass** die zweite Welle (13) des ersten Planetenradsatzes (8) vom Hohlrad (22) und die dritte Welle (14) des ersten Planetenradsatzes (8) vom Sonnenrad (24) gebildet wird.

6. Getriebebaueinheit (1) nach einem der Ansprüche 1 bis 5, **dadurch gekennzeichnet, dass** die einzelnen Kupplungseinrichtungen (K1, K2) einen Ausgangsteil (18.1, 18.2) aufweisen, der mit dem Ausgang (A) drehfest verbunden ist.

7. Getriebebaueinheit (1) nach einem der Ansprüche 1 bis 6, **dadurch gekennzeichnet, dass** das stufenlose Getriebe (3) als Zugmittelgetriebe (31) ausgeführt ist.

8. Getriebebaueinheit (1) nach Anspruch 7, **dadurch gekennzeichnet, dass** das Zugmittelgetriebe (31) ein kraftschlüssiges oder ein formschlüssiges Zugmitteigetriebe ist.

9. Getriebebaueinheit (1) nach einem der Ansprüche 1 bis 6, **dadurch gekennzeichnet, dass** das stufenlose Getriebe (3) als mechanisches Toroidgetriebe ausgebildet ist.

10. Getriebebaueinheit (1) nach einem der Ansprüche 1 bis 6, **dadurch gekennzeichnet, dass** das stufenlose Getriebe (3) als elektrisches Getriebe ausgeführt ist.

## Claims

1. A transmission unit (1), especially a multistage transmission, comprising an input (E) and an output (A), a continuously variable transmission part (3) and a mechanical transmission part (4), with the mechanical transmission part (4) comprising a four-shaft planetary gear (5), consisting of a first planetary gear set (8) and a second planetary gear set (10), with there not being any direct coupling in all operating ranges between the transmission input shaft (E) and the continuously variable transmission part (3), **characterized in that** the four-shaft planetary gear (5) is optionally connected with the output (A) via a first shiftable coupling device (K1) or a second shiftable coupling device (K2), with the first planetary gear set (8) being **characterized by** three shafts (11, 13, 14) and the second planetary gear set (10) by two shafts (12, 15), with the coupling between the first (8) and the second planetary gear set (10) occurring via a common planet carrier (20, 21), and the first planetary gear set (8) and the second planetary gear set (10) of the planetary gear (5) each comprise a first shaft (11, 12) and a second shaft (13, 15), with the first shafts (11, 12) being connected in a torque-proof manner with one another and at least indirectly with the transmission input (E), and the second shaft (13) of the first planetary gear set (8) is connected with the continuously variable transmission part (3) and the second shaft (15) of the second planetary gear set (10) is connected with an input part (16) of the first coupling device (K1) and the first planetary gear set (8) comprises a third shaft (14) which is connected with the continuously variable transmission (3), with the third shaft (14) further being connectible via the second coupling device (K2) with the output (A).

2. A transmission unit (1) according to claim 1, **characterized in that** the second planetary gear set (10) of the planetary gear (5) can be connected with the output (A) via the first coupling device (K1).

3. A transmission unit (1) according to claim 1 or 2, **characterized in that** the second (13) and third shaft (14) of the first planetary gear set (8) are each connected via a speed step (29, 30) with the continuously variable transmission (3).

4. A transmission unit (1) according to one of the claims 1 to 3, **characterized in that** the first shaft (11, 12) of the first planetary gear set (8) and second planetary gear set (10) is each formed by the planet carrier (20, 21) of the planetary gear sets (8, 10) and the planetary wheels (25, 26) of the individual planetary gear sets (8, 10) are coupled in a torque-proof manner with one another.

5. A transmission unit (1) according to one of the claims 1 to 4, **characterized in that** the second shaft (13) of the first planetary gear set (8) is formed by the hollow wheel (22) and the third shaft (14) of the first planetary gear set (8) by the sun wheel (24).

6. A transmission unit (1) according to one of the claims 1 to 5, **characterized in that** the individual coupling devices (K1, K2) have an output part (18.1, 18.2) which is connected with the output (A) in a torque-proof manner.

7. A transmission unit (1) according to one of the claims 1 to 6, **characterized in that** the continuously variable transmission (3) is arranged as an endless belt transmission (31).

8. A transmission unit (1) according to claim 7, **characterized in that** the endless belt transmission (31) is a non-positive or positive endless belt transmission.

9. A transmission unit (1) according to one of the claims 1 to 6, **characterized in that** the continuously variable transmission (3) is arranged as a mechanical toroidal transmission.

10. A transmission unit (1) according to one of the claims 1 to 6, **characterized in that** the continuously variable transmission (3) is arranged as an electric transmission.

## Revendications

1. Unité de transmission (1), en particulier transmission à plusieurs étages, comprenant une entrée (E) et une sortie (A), avec une partie de transmission sans étages (3) et une partie de transmission mécanique (4), dans laquelle la partie de transmission mécanique (4) comprend un engrenage à train planétaire à quatre arbres (5) qui se compose d'un premier train planétaire (8) et d'un deuxième train planétaire (10), dans laquelle il n'y a dans aucune plage de fonctionnement un couplage direct entre l'arbre d'entrée de la transmission (E) et la partie de transmission sans étages (3), **caractérisée en ce que** l'engrenage à train planétaire à quatre arbres (5) est relié sélectivement par un premier dispositif d'accouplement embrayable (K1) ou un deuxième dispositif d'accouplement embrayable (K2) à la sortie (A), le premier train planétaire (8) est **caractérisé par** deux arbres (11, 13, 14) et le deuxième train planétaire (10) par deux arbres (12, 15), l'accouplement entre le premier train planétaire (4) et le deuxième (10) étant réalisé par une barrette commune (20, 21), et en ce que le premier train planétaire (8) et le deuxième train planétaire (10) de l'engrenage à train planétaire (5) possèdent chacun un premier arbre (11, 12) et un deuxième arbre (13,15), les premiers arbres (11, 12) étant reliés de façon solidaire en rotation et au moins indirectement avec l'entrée de la transmission (E) et le deuxième arbre (13) du premier train planétaire (8) étant relié à la partie de transmission sans étages (3) et le deuxième arbre (15) du deuxième train planétaire (10) avec une partie d'entrée (16) du premier dispositif d'accouplement (K1) et le premier train planétaire (8) comprenant un troisième arbre (14) qui est relié à la partie de transmission sans étages (3), le troisième arbre (14) pouvant en outre être relié à la sortie (A) par le deuxième dispositif d'accouplement (K2).

2. Unité de transmission (1) selon la revendication 1, **caractérisée en ce que** le deuxième train planétaire (10) de L'engrenage à train planétaire (5) peut être relié à la sortie (A) par le premier dispositif d'accouplement (K1).

3. Unité de transmission (1) selon l'une des revendications 1 ou 2, **caractérisée en ce que** le deuxième arbre (13) et le troisième (14) du premier train planétaire (8) sont reliés par un étage de multiplication (29, 30) à la partie de transmission sans étages (3).

4. Unité de transmission (1) selon l'une des revendications 1 à 3, **caractérisée en ce que** le premier arbre (11, 12) du premier train planétaire (8) et du deuxième train planétaire (10) sont formés par le porte-pignons (20, 21) de chacun des trains planétaires (8, 10) et les roues planétaires (25, 26) de chacun des trains planétaires (8, 10) sont couplées entre elles de façon solidaire en rotation.

5. Unité de transmission (1) selon l'une des revendications 1 à 4, **caractérisée en ce que** le deuxième arbre (13) du premier train planétaire (8) est formé par la couronne (22) et le troisième arbre (14) du premier train planétaire (8) par la roue solaire (24).

6. Unité de transmission (1) selon l'une des revendications 1 à 5, **caractérisée en ce que** les différents dispositifs d'accouplement (K1, K2) présentent une partie de sortie (18.1, 18.2) qui est reliée à la sortie (A) de manière solidaire en rotation.

7. Unité de transmission (1) selon l'une des revendications 1 à 6, **caractérisée en ce que** la partie de transmission sans étages (3) est réalisée comme une transmission à moyen de traction (31).

8. Unité de transmission (1) selon la revendication 7, **caractérisée en ce que** la transmission à moyens de traction (31) est une transmission à moyen de traction par friction ou par correspondance de forme.

9. Unité de transmission (1) selon l'une des revendications 1 à 6, **caractérisée en ce que** la partie de transmission sans étages (3) est réalisée comme une transmission toroïdale mécanique.

10. Unité de transmission (1) selon l'une des revendications 1 à 6, **caractérisée en ce que** la partie de transmission sans étages (3) est réalisée comme une transmission électrique.
